# EUROPÄISCHE PATENTSCHRIFT

(11) **EP 0 590 450 B1**
(45) Veröffentlichungstag und Bekanntmachung des Hinweises auf die Patenterteilung: **02.12.1998**
(21) Anmeldenummer: 93115057.7
(22) Anmeldetag: 18.09.1993
(51) Int. Cl.: H04M 1/06

(54) **Halterung für einen Handapparat**
Telephone handset support
Support pour combiné téléphonique

(30) Priorität: 30.09.1992 DE 4232815; 07.08.1993 DE 4326572
(43) Veröffentlichungstag der Anmeldung: 06.04.1994
(73) Patentinhaber: ROBERT BOSCH GMBH, 70442 Stuttgart (DE)
(72) Erfinder: Dürbeck, Horst-Peger, D-14197 Berlin (DE); Birkl, Gérard-Emile, Dipl.-Ing., D-12053 Berlin (DE); Krajewski, Andreas, Dipl.-Ing., D-13589 Berlin (DE)

(56) Entgegenhaltungen:
- US-A- 4 741 034
- US-A- 4 782 528
- US-A- 4 969 187
- MOTOROLA TECHNICAL DISCLOSURE BULLETIN Bd. 3, Nr. 1 , März 1983 , SCHAUMBURG ILLINOIS US Seiten 8 - 9 IRVING 'HANDSET LATCH & DELATCH SYSTEM'
- PATENT ABSTRACTS OF JAPAN vol. 13, no. 139 (E-738)6. April 1989 & JP-A-63 302 651 (FUJITSU LTD)
- PATENT ABSTRACTS OF JAPAN vol. 13, no. 160 (E-744)18. April 1989 & JP-A-63 313 948 (MATSUSHITA GRAPHIC COMMUN SYST INC)

## Beschreibung

### Stand der Technik

Die Erfindung geht aus von einer Halterung für einen Handapparat, beispielsweise eines Telefonhörers eines Funktelefons, nach der Gattung des Hauptanspruchs. Es ist bereits bekannt, den Handapparat eines Telefons, insbesondere auch eines Funktelefons, in speziell gestalteten Aufnahmevorrichtungen, die ausgeformte Mulden aufweisen, zu haltern. Damit die Halterung sowohl für eine waagerechte als auch für eine senkrechte Aufnahme der Handapparate geeignet sind, sind bereits zusätzliche Arretierungsmittel vorgeschlagen worden, die eine Verriegelung der Handapparate übernehmen.

Als solche Arretierungsmittel sind beispielsweise korrespondierende, eine Halterung übernehmende, Magnete beschrieben worden. Weiterhin ist bekannt, über auf Achsen schwenkbar angeordnete Federelemente ein Festklemmen zu ermöglichen, wobei die Federelemente bei der Entnahme des Handapparates erst entriegelt werden müssen. Allen bekannten Lösungen ist gemeinsam, daß zusätzliche mechanische Elemente angeordnet sind, die einerseits den technischen Aufwand erheblich vergrößern und andererseits ein höheres Gewicht der Anordnung bewirken.

Aus der JP-A-63313948 (Patent Abstracts of Japan) ist bereits eine Halterung für einen Handapparat mit einer der Form des Handapparates angepaßten Mulde und einem im Bereich der Mulde angeformten, elastisch deformierbaren Teil bekannt, wobei das elastisch deformierbare Teil einen aufgelegten Handapparat nach unten gegen die Mulde drückt und dadurch verhindert, daß der Handapparat aufgrund von Vibrationen von der Halterung fällt.

### Vorteile der Erfindung

Die erfindungsgemäße Halterung mit den kennzeichnenden Merkmalen des Hauptanspruchs hat demgegenüber den Vorteil, daß eine einfache und sichere Arretierung und komplikationslose Entnahme des Handapparates gewährleistet ist, ohne einen besonders hohen technischen Aufwand zu erfordern.

Durch die in den Unteransprüchen aufgeführten Maßnahmen sind vorteilhafte Weiterbildungen und Verbesserungen der im Hauptanspruch angegebenen Halterung möglich.

Besonders vorteilhaft ist, eine Anschlagwand für den Rasthaken vorzusehen, wodurch ein Überdehnen oder gar Abbrechen des Rasthakens vermieden wird. Es erweist sich als vorteilhaft, einen bogenförmigen Bereich vorzusehen, wodurch eine bessere Federwirkung des Rasthakens erreicht werden kann. Die Kombination eines Vorsprungs mit einer Ausnehmung bringt den Vorteil einer definierten Endlage des Handapparates und einer Entspannung und somit materialschonenden Entlastung des Rasthakens bei aufgelegtem Handapparat mit sich. Durch die Anordnung einer Haltenase gegenüber dem Rasthaken wird die Sicherheit des Handapparates gegen unbeabsichtigtes Herausfallen erhöht. Durch die Anordnung der Haltenase in der Mulde, sodaß sie an der Stirnseite in die Hörmuschel des Handapparats eingreift und des Rasthakens auf der gegenüberliegenden Seite der Mulde ist eine leichte, bequeme Handhabung des Handapparats gewährleistet. Eine Anordnung des Rasthakens in der Mulde, sodaß er auf der Stirnseite in die Hörmuschel eingreift und der Haltenase auf der gegenüberliegenden Seite der Mulde bringt den Vorteil mit sich, daß der Bereich der Halterung unter der Auflagenfläche des Handapparats frei von mechanisch beweglichen Teilen ist, wodurch eine eventuell darin befindliche Schaltung vor mechanischen Einflüssen geschützt ist.

### Zeichnung

Ausführungsbeispiele der Erfindung sind in der Zeichnung dargestellt und anhand der nachfolgenden Beschreibung näher erläutert.

Es zeigen
Figur 1 eine Halterung für einen Handapparat in einer ersten Ausführungsform,
Figur 2 eine Halterung für einen Handapparat in einer zweiten Ausführungsform.

### Beschreibung

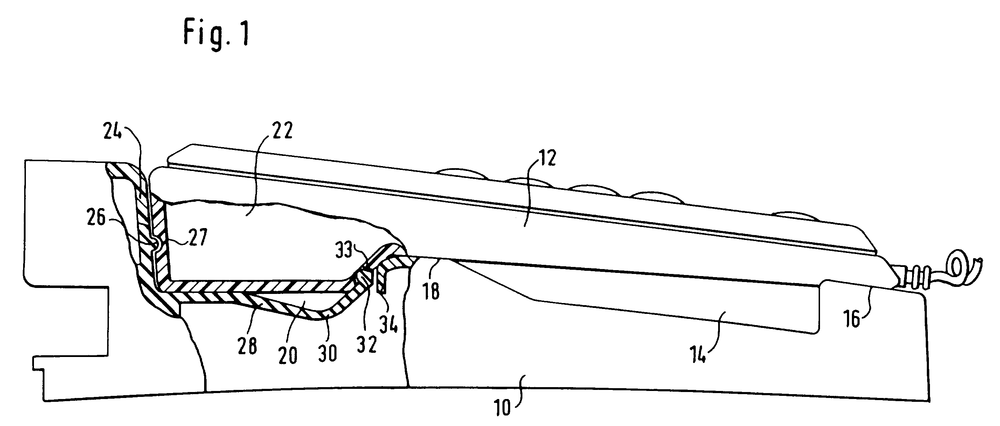

Figur 1 zeigt eine Halterung 10 für einen Handapparat 12 mit einer Hörmuschel 22, beispielsweise eines Funktelefons. Die Halterung 10 weist eine durch eine Griffmulde 14 getrennte erste Auflagefläche 16 und zweite Auflagefläche 18 auf. Die Halterung 10 weist weiterhin eine Mulde 20 auf, die in ihrer Form der Kontur der Hörmuschel 22 des Handapparates 12 angepaßt ist. Die Mulde 20 ist durch eine Stirnwand 24 begrenzt, die eine Haltenase 26 aufweist. Die Haltenase 26 greift in eine entsprechende Ausnehmung 27 an der Stirnseite der Hörmuschel 22 des Handapparates 12 ein. Die Mulde 20 weist zudem einen elastischen Rasthaken 28 auf, der in einen bogenförmigen Bereich 30 ausläuft und dort einen Vorsprung 32 aufweist, der in eine ebenfalls an der Hörmuschel 22 am Handapparat 12 vorgesehene Ausnehmung 33 eingreift. Der Rasthaken 28 liegt im belasteten Zustand mit seinem Ende an einer Anschlagwand 34 an.

Wenn der Handapparat 12 in der Halterung 10 abgelegt und arretiert werden soll, so wird der Handapparat 12 mit seiner Ausnehmung 27 mit der Haltenase 26 in der Stirnwand 24 in Eingriff gebracht. Der Handapparat 12 wird nunmehr nach unten auf die Auflageflächen 16, 18 geführt. Hierdurch wird gleichzeitig der Rasthaken 28 elastisch verformt und der Vorsprung 32 gleitet entlang des Handapparates 12, bis er in die Ausnehmung 33 eingreift. Ein Überdehnen des Rasthakens 28 bei starker Belastung wird durch die Anschlagwand 34 verhindert. Der Rasthaken 28 übt eine Federkraft auf den Handapparat 12 aus, die diesen formschlüssig in dieser Lage beläßt. Zum Lösen des Handapparates 12 muß eine Mindestkraft aufgewendet werden, die den Vorsprung 32 und die Ausnehmung 33 wieder außer Eingriff bringt.

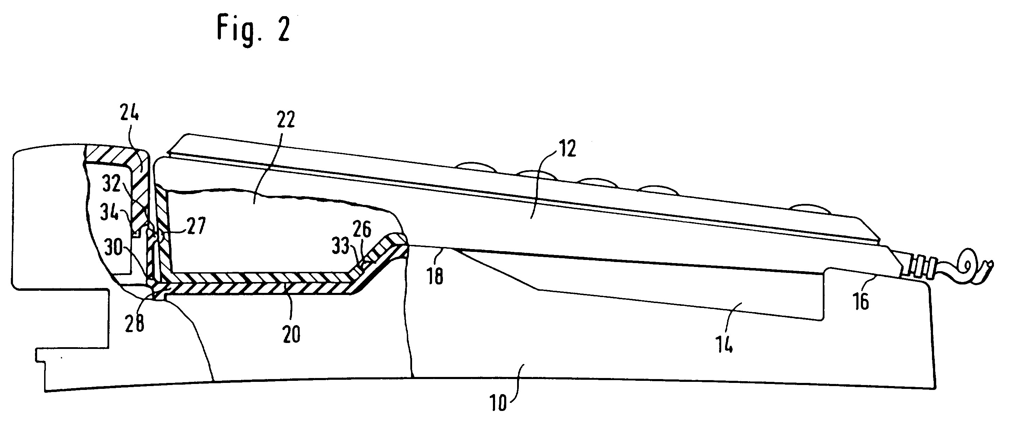

Die in Figur 2 dargestellt Halterung für einen Handapparat ist im wesentlichen gleich aufgebaut wie die Halterung in Figur 1, wobei gleiche Zahlen gleiche Teile bezeichnen, mit dem Unterschied, daß der Rasthaken 28 mit Vorsprung 32 und die Haltenase 26 vertauscht sind, so daß der Rasthaken 28 an der Stirnwand 24 angeordnet ist und die Mulde 20 auf der der Stirnseite gegenüberliegenden Seite die Haltenase 26 aufweist.

Beim Auflegen des Handapparates 12 auf die Halterung 10 wird der Rasthaken 28 zunächst wiederum mittels der Hörmuschel 22 so weit zurückgebogen, daß der Handapparat 12 in die Halterung 10 gleiten kann, woraufhin der Rasthaken 28 mit dem Vorsprung 32 in die Ausnehmung 27 des Handapparates 12 einrastet, während die Haltenase 26 in der Ausnehmung 33 zu liegen kommt.

## Patentansprüche

1. Halterung für einen Handapparat mit einer der Form des Handapparates angepaßten Mulde und Arretierungsmitteln, wobei als Arretierungsmittel ein im Bereich der Mulde (20) angeformtes, in sich elastisches Teil (28) vorgesehen ist, das bei auf die Halterung (10) aufgelegtem Handapparat (129 eine Arretierung des Handapparates (12) bewirkt, dadurch gekennzeichnet, daß das in sich elastische Teil (28) als Rasthaken ausgebildet ist und mit dem aufgelegten Handapparat (12) eine Rastverbindung eingeht.

2. Halterung nach Anspruch 1, dadurch gekennzeichnet, daß der Federweg des elastischen Rasthakens (28) durch eine Anschlagwand (34) begrenzt ist.

3. Halterung nach einem der Ansprüche 1, 2, dadurch gekennzeichnet, daß der elastische Rasthaken (28) einen bogenförmigen Bereich (30) aufweist.

4. Halterung nach einem der Ansprüche 1 bis 3, dadurch gekennzeichnet, daß der elastische Rasthaken (28) einen Vorsprung (32) aufweist, der in eine entsprechende Ausnehmung (33) des Handapparates (12) eingreift.

5. Halterung nach einem der Ansprüche 1 bis 4, dadurch gekennzeichnet, daß auf der dem elastischen Rasthaken (28) gegenüberliegenden Seite der Mulde (20) eine Haltenase (26) angeordnet ist, die bei auf die Halterung (10) aufgelegtem Handapparat (12) in eine weitere Ausnehmung (27) des Handapparats (12) eingreift.

6. Halterung nach Anspruch 5, dadurch gekennzeichnet, daß die Mulde (20) zur Aufnahme einer Hörmuschel (22) des Handapparates (12) an der Stirnseite des Handapparates (12) die Haltenase (26) aufweist.

7. Halterung nach Anspruch 5, dadurch gekennzeichnet, daß die Mulde (20) zur Aufnahme einer Hörmuschel (22) des Handapparates (12) an der Stirnseite des Handapparates (12) den elastischen Rasthaken (28) aufweist.

## Claims

1. Support for a telephone handset, having a hollow which is adapted to the shape of the handset and having arresting means, the arresting means provided being an inherently elastic part (28) which is integrally formed in the region of the hollow (20) and, when the handset (12) has been positioned on the support (10), causes the handset (12) to be arrested, characterized in that the inherently elastic part (28) is designed as a latching hook and undergoes a latching connection with the handset (12) when the latter has been positioned on the support.

2. Support according to Claim 1, characterized in that the resilient deflection of the elastic latching hook (28) is restricted by a stop wall (34).

3. Support according to one of Claims 1 and 2, characterized in that the elastic latching hook (28) has an arcuate region (30).

4. Support according to one of Claims 1 to 3, characterized in that the elastic latching hook (28) has a protrusion (32) which engages in a corresponding recess (33) of the handset (12).

5. Support according to one of Claims 1 to 4, characterized in that arranged on that side of the hollow (20) which is located opposite the elastic latching hook (28) is a retaining nose (26) which, when the handset (12) has been positioned on the support (10), engages in a further recess (27) of the handset (12).

6. Support according to Claim 5, characterized in that the hollow (20), for receiving an earpiece (22) of the handset (12), has the retaining nose (26) at the end side of the handset (12).

7. Support according to Claim 5, characterized in that the hollow (20), for receiving an earpiece (22) of the handset (12), has the elastic latching hook (28) at the end side of the handset (12).

## Revendications

1. Support pour combiné téléphonique, comportant une cavité adaptée à la forme du combiné et des moyens d'arrêt, une pièce élastique (28) moulée au niveau de la cavité (20) étant prévue comme moyen d'arrêt pour maintenir le combiné (12) lorsqu'il est posé sur le support (10),
caractérisé en ce que
la pièce élastique (28) a la forme d'un crochet d'arrêt et crée une liaison d'arrêt avec le combiné posé (12).

2. Support selon la revendication 1,
caractérisé en ce que
la course élastique du crochet d'arrêt (28) est limitée par une paroi (34) formant butée.

3. Support selon l'une des revendications 1 et 2,
caractérisé en ce que
le crochet élastique d'arrêt (28) comporte une zone (30) recourbée en arc.

4. Support selon l'une des revendications 1 à 3,
caractérisé en ce que
le crochet élastique d'arrêt (28) comporte une saillie (32) qui vient en prise dans un évidement correspondant (33) du combiné (12).

5. Support selon l'une des revendications 1 à 4,
caractérisé en ce que
sur le côté de la cavité (20) situé en face du crochet élastique d'arrêt (28) se trouve un ergot de maintien (26) qui vient en prise dans un autre évidement du combiné (12) lorsque celui-ci est posé sur le support.

6. Support selon la revendication 5,
caractérisé en ce que
la cavité (20) servant à recevoir le pavillon d'écoute (22) du combiné (12) porte l'ergot de maintien (26) coopérant avec la face frontale du combiné (12).

7. Support selon la revendication 5,
caractérisé en ce que
la cavité (20) servant à recevoir le pavillon d'écoute (22) du combiné (12) présente, le long de la paroi frontale du combiné (12), le crochet élastique d'arrêt (28).
